# EUROPEAN PATENT APPLICATION

(11) **EP 4 018 835 A1**
(43) Date of publication of application: **29.06.2022**
(21) Application number: 21206485.1
(22) Date of filing: 04.11.2021
(51) Int. Cl.: A23C 3/02, A23C 3/07, A23L 3/16, A23L 3/30, C02F 1/36, C02F 1/02

(54) **A METHOD FOR HEAT TREATING A LIQUID FOOD PRODUCT AND A HEAT TREATMENT APPARATUS**

(30) Priority: 28.12.2020 EP 20217351
(71) Applicant: Tetra Laval Holdings & Finance S.A., 1009 Pully (CH)
(72) Inventor: Gullberg, Magnus, 212 42 Malmo (SE); MATHISSON, Jaana, 226 39 LUND (SE)
(74) Representative: Tetra Pak - Patent Attorneys SE

(57) **Abstract**

A method for heat treating a liquid food product (LFP) in a heat treatment apparatus (100), the method comprising transferring the liquid food product (LFP) through a flow path (FP) of the heat treatment apparatus (100), heating the liquid food product (LFP) with a heat transfer medium (HTM), and generating ultrasonic pulses (112), by using an ultrasound generator (110), in at least one section (114) of the flow path (FP), for preventing accumulations (116) of the liquid food product (LFP) to deposit on said at least one section (114) of the flow path (FP) or for removing accumulations (116) of the liquid food product (LFP) deposited on said at least one section (114).

## Description

### Technical Field

The invention relates to liquid food processing in general, and more particularly to a method for heat treating a liquid food product and a heat treatment apparatus.

### Background Art

Today, a key factor for food producers when deciding which food processing line to use is running time. For instance, in case the food processing line has to be cleaned or serviced frequently, time of production will be negatively affected, and as a consequence less food products will be produced.

The running time of the food processing line can be related to a number of different factors. For instance, a heat treatment apparatus comprised in the food processing line may be designed in a way such that this has to be cleaned frequently. There may be different reasons for this, e.g. quality of stainless steel used. Food product properties may also affect the running time. For instance, a food product containing minerals and protein may cause fouling, which has to be removed in order to assure adequate heat treatment and for maintaining sanitary conditions. Yet another factor affecting the running time as well as fouling is heat treatment temperature. For instance, if running at ultra-high temperature (UHT), often 120 degrees C or above, there will be more fouling compared to if running at pasteurization temperature, about 73 degrees C.

Different measures have been made to reduce the need of cleaning to thereby improve the running time. For instance, in tubular heat exchangers baffles can be arranged in the flow path of the product to be heat treated. A positive effect of this is that, when running the tubular heat exchangers, no pulp or other food product components are caught in the baffles due to increased turbulence caused by the baffles. This provides for that a need for cleaning is reduced and hence the running time can be improved.

Even though the food processing lines of today and different pieces of equipment in the lines are made to offer competitive running times, there is a need to further improve the running time such that in turn more cost efficient production can be made possible. Further, there is also a need for additional measures for improving the running time that can complement existing solutions such that improved customization in terms of improved running time can be offered.

### Summary

It is an object of the invention to at least partly overcome one or more of the above-identified limitations of the prior art. In particular, it is an object to improve the running time of heat treatment apparatuses.

According to a first aspect it is provided a method for heat treating a liquid food product LFP in a heat treatment apparatus, said method comprising receiving the liquid food product via an inlet pipe of the heat treatment apparatus, transferring, by using a feed pump, the liquid food product through a flow path of the heat treatment apparatus, heating the liquid food product with a heat transfer medium, feeding out the liquid food product via an outlet pipe of the heat treatment apparatus, and generating ultrasonic pulses, by using an ultrasound generator, in at least one section of the flow path, for preventing accumulations of the liquid food product to deposit on said at least one section of the flow path or removing accumulations of the liquid food product deposited on the at least one section of the flow path.

An advantage of using the ultrasound generator in the heat treatment apparatus is that this can be used both for preventing that the accumulations, e.g. fouling, are formed as well as for removing the accumulations if these are formed. Put differently, the ultrasound generator is a versatile tool for reducing an impact of the accumulations, and thereby improving the running time. The heat treatment apparatus may, for example, be a steam injector or a heat exchanger.

Using ultrasonic pulses has the advantage that the accumulations can be removed, e.g. by being disintegrated into small pieces that are transported away by the liquid food product, without negatively affecting the quality of the liquid food product. In other words, there will no or few negative bi-effects affecting the liquid food product. The same holds true for the equipment. Put differently, there are no or at least few bi-effects on the heat treatment apparatus when using the ultrasonic pulses.

The ultrasound generator can be attached to an outside of the heat treatment apparatus and the ultrasonic pulses penetrate through a wall of the heat treatment apparatus and into the flow path.

An advantage with this is that the ultrasound generator can be placed outside the flow path, i.e. there is no direct contact between the liquid food product and the ultrasound generator. From a food safety perspective as well as an installation perspective, this is beneficial.

The method may further comprise measuring a temperature of the liquid food product, and determining a combination of frequency, amplitude and duration of the ultrasonic pulses based on the temperature of the liquid food product passing through the flow path.

Different types of accumulations may be formed at different temperatures. For instance, in case milk is heat treated, protein fouling, which is a type of accumulations, may be formed at 65-66 degrees C and mineral fouling, which is a different type of accumulations, may be formed at 120-137 degrees C. By measuring or by in some other way obtaining the temperature, it may be determined which type of accumulations that are likely to occur, and with this information at hand the combination of frequency, amplitude and duration of the ultrasonic pulses can be adapted to meet specific properties of these accumulations that are likely to occur. Thus, by measuring the temperature and setting the combination as a function of the temperature, the accumulations may be prevented and removed more efficiently, which in turn provides for improved running time.

The method may further comprise measuring a flow of the liquid food product, and determining the combination of the frequency, the amplitude and the duration of the ultrasonic pulses based on the flow of the liquid food product passing through the flow path.

Different types of accumulations may be formed at different flows. Thus, by measuring the flow and adapting the combination based on the flow, the accumulations can be removed and prevented more efficiently.

Since build-up of the accumulations may generally be affected by the flow, measuring the flow may also be used for energy saving purposes. Put differently, by having more information about conditions affecting the build-up of the accumulations, the ultrasonic pulses can be used only when having an effect and be turned off at other times. This line of reasoning also holds true for the temperature.

The temperature and the flow may be used in combination for determining the combination of frequency, amplitude and duration. By using these two in combination, the running time of the heat treatment apparatus may thus be even further improved.

The method may further comprise receiving information about content of the liquid food product, such as mineral content or protein content of the liquid food product, and determining the combination of the frequency, the amplitude and the duration of the ultrasonic pulses based on the content of the liquid food product passing through the flow path.

Since the content of the liquid food product, i.e. the type of the liquid food product, affects which types of accumulations that are formed, information about the content of the liquid food product may be taken into account when determining the combination of frequency, amplitude and duration. The information may be input by an operator via an operator panel. Thus, by taking into account the content, the combination can be fine-tuned more precisely to the accumulations, and as an effect of this the running time can be improved. This information may be used on its own or it may be used in combination with the temperature and/or the flow.

The frequency may be set as a protein accumulation disintegration frequency or a mineral accumulation disintegration frequency, wherein the mineral accumulation disintegration frequency is different from the protein accumulation disintegration frequency.

When heat treating milk or other liquid food product containing protein and mineral, two different types of accumulations may be formed: protein fouling and mineral fouling. These two accumulations have different properties and as an effect it may be beneficial to use different frequencies for removing or preventing these accumulations efficiently. Here "protein accumulation disintegration frequency" is a first frequency that is efficient to use for removing accumulations formed due to primarily the protein content of the product. In a similar manner, "mineral accumulation disintegration frequency" is a second frequency that is efficient to use for removing accumulations formed due to primarily the mineral content of the product. The product is typically a dairy product or a plant based liquid food product such as soy milk or oat milk. Exactly which frequency values the protein respectively mineral accumulation disintegration frequencies shall have may be empirically determined for each type of food product that shall be heat treated.

The step of generating the ultrasonic pulses, by using the ultrasound generator, in the at least one section of the flow path may comprise the sub-steps of generating a first set of ultrasonic pulses with the mineral accumulation disintegration frequency, and generating a second set of ultrasonic pulses with the protein accumulation disintegration frequency.

By having the first set of pulses with the mineral accumulation disintegration frequency and the second set of pulses with the protein accumulation disintegration frequency, the two different types of accumulation can be addressed specifically, and by doing so the running time of the heat treatment apparatus may be improved.

The step of transferring the liquid food product may comprise feeding the liquid food product through a number of tube bundles and a number of connection pipes that connects two tube bundles to each other, wherein the number of connection pipes and the number of tube bundles together form the flow path, wherein the step of heating the liquid food product may comprise providing the heat transfer medium in a number of outer shells placed around the number of tube bundles.

In the tubular heat exchanger, the ultrasound generator can be attached to tubes having sections particularly prone to build-up of accumulations. In this way, fouling may be efficiently decreased such that the operational time is increased.

The at least one section of the flow path may be comprised in one of the number of connection pipes.

It has been found that in an interface between the tube bundles and the connection pipes, build-up of accumulations may be particularly severe. Addressing this problem by generating ultrasound pulses has been advantageous in that fouling can be reduced.

A first ultrasonic generator may be placed at the inlet of one of the tube bundles and a second ultrasonic generator may be placed at the outlet on the same tube bundle.

An advantage with having one ultrasonic generator in each end of the tube bundle is that these may be operated in combination, and as an effect the impact of the accumulations can be reduced.

The liquid food product may be a protein-enriched liquid food product.

Since protein causes fouling, a type of accumulation, the protein-enriched products are more prone to cause fouling than non-protein-enriched liquid food products. In short, the protein-enriched liquid food product is to be understood to be a liquid food product in which the protein content has been enriched such that this above natural levels. This enrichment may be made by using filter technologies. The protein-enriched liquid food product may be milk having a protein content above 4% (weight). The protein-enriched liquid food product may also be a oat-based liquid food product having a protein content above 1.5 % (weight).

According to a second aspect it is provided a heat treatment apparatus for heat treating a liquid food product, said apparatus comprising an inlet pipe for receiving the liquid food product, a main body for holding the liquid food product, a heat transfer medium provider for heating the liquid food product with a heat transfer medium, an outlet pipe for feeding out the liquid food product, wherein the heat treatment apparatus may be arranged to transfer the liquid food product along a flow path through the inlet pipe, the main body and the outlet pipe, and an ultrasound generator for generating ultrasonic pulses in at least one section of the flow path for preventing accumulations of the liquid food product to deposit on said at least one section of the flow path or removing accumulations of the liquid food product deposited on the at least one section of the flow path.

The same advantages as presented above with reference to the first aspect also apply to this second aspect.

Thus, for example, the ultrasound generator may be attached to an outside of the heat treatment apparatus and the ultrasonic pulses penetrate through a wall of the heat treatment apparatus and into the flow path.

In another example, the heat treatment apparatus may further comprise a temperature sensor configured to measure a temperature of the liquid food product and to generate temperature measurement data corresponding to the temperature, a control unit configured to receive the temperature measurement data from the temperature sensor, to determine a combination of frequency, amplitude and duration of the ultrasonic pulses based on the temperature of the liquid food product passing through the flow path, and to transmit control data to the ultrasound generator to set the ultrasound generator to generate the ultrasonic pulses according to the combination of the frequency, the amplitude and the duration.

In another example, the heat treatment apparatus may further comprise a flow sensor configured to measure a flow of the liquid food product and to generate flow measurement data corresponding to the flow, wherein the control unit is configured to receive the flow measurement data from the flow sensor, to determine the combination of the frequency, the amplitude and the duration of the ultrasonic pulses based on the flow of the liquid food product passing through the flow path, and to transmit the control data to the ultrasound generator to set the ultrasound generator to generate the ultrasonic pulses according to the combination of the frequency, the amplitude and the duration.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 illustrates a heat treatment apparatus in form of a stem injector provided with an ultrasound generator.
Fig. 2 illustrates a heat treatment apparatus in form of a tubular heat exchanger provided with the ultrasound generator.
Fig. 3 is a flowchart illustrating the method for heat treating a liquid food product in a heat treatment apparatus such as a steam injector or a heat exchanger.

### Detailed Description

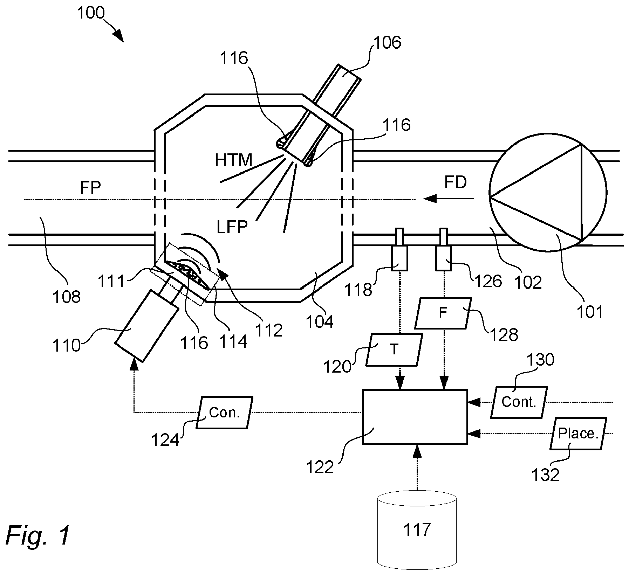

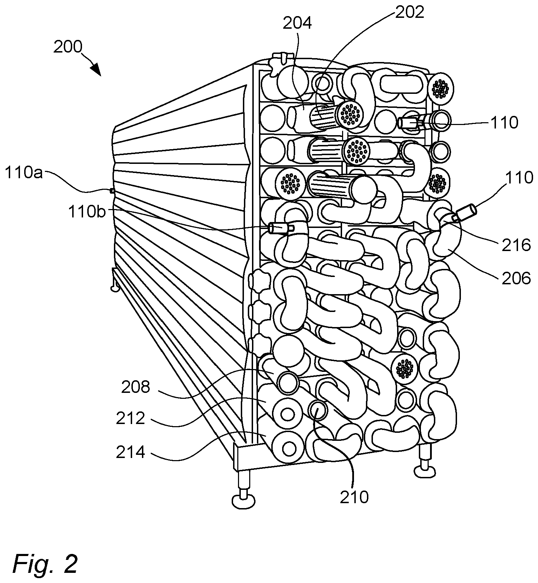

Fig. 1 illustrates a heat treatment apparatus 100, more particularly a steam injector heat treatment apparatus. There is a wide range of heat treatment apparatuses 100 that can be used for heat treating liquid food product LFP such that bacteria, spores and other unwanted microorganisms can be killed, and the steam injector heat treatment apparatus illustrated in fig. 1 is thus just an example. Common for the different heat treatment apparatuses is that the liquid food product is heated by exposing it, directly or indirectly, to a heat transfer medium HTM such that heat from the heat transfer medium can be transferred to the liquid food product LFP. The steam injector heat treatment apparatus illustrated in fig. 1 is an example of when the heat transfer medium HTM, herein in the form of steam, is injected into the liquid food product LFP. Since the steam will turn into water when being cooled off, a resulting effect of injecting the steam into the liquid food product LFP will that a temperature T of the liquid food product LFP is increased and that a water content in the liquid food product LFP is increased as well. An example of when the heat transfer medium HTM is used for indirectly heating the liquid food product LFP is a tubular heat exchanger. This will be further described below with reference to fig. 2.

As illustrated, a feed pump 101 can be used for transferring the liquid food product LFP through the heat treatment apparatus 100. The feed pump 101 may form part of the heat treatment apparatus 101, i.e. it may be an integral part of the heat treatment apparatus 100, or it may be external to the heat treatment apparatus 100. The liquid food product LFP is transferred in a flow direction FD along a flow path FP running from an inlet pipe 102 via a main body 104 and out from the heat treatment apparatus 100 via an outlet pipe 108. In the main body 104, which may, as illustrated, have different geometrical properties compared to the inlet and outlet pipe 102, 108, a heat transfer medium provider 106 can be placed. As in this example, the heat transfer medium provider 106 can be a steam injector arranged to inject steam into the liquid food product.

An ultrasound generator 110 may be attached to a wall 111 of the main body 104 such that ultrasonic pulses 112 can be generated in at least one section 114 of the flow path FP. By providing the ultrasonic pulses 112 it can be prevented that accumulations 116 of the liquid food product LFP deposit on the at least one section 114 or, if there are already accumulations 116 formed, that these are removed. Ultrasound generators have per se been known for some time. The ultrasound generator 110 used herein may be any suitable and commercially available ultrasound generator.

An advantage with using the ultrasonic pulses 112 for removing the accumulations 116 or preventing build-up of the accumulations 116 is that these can penetrate the wall 111, and hence that no direct contact with the liquid food product LFP is required. From a food safety perspective, this is in advantageous since the risk of contaminating the liquid food product LFP can be kept low. It is also advantageous from an installation or adjustment perspective, no or at least few modifications of the inlet pipe, the main body 104 or the outlet pipe 108 are required when installing or adjusting the ultrasound generator 110.

Different types of accumulations of the liquid food product LFP, such as fouling, may respond differently to different combinations of frequency f, amplitude A and duration Δt of the ultrasonic pulses 112. For instance, mineral-based fouling may disintegrate if exposed to ultrasonic pulses having a mineral accumulation disintegration frequency and protein-based fouling may disintegrate if exposed to ultrasonic pulses having a protein accumulation disintegration frequency. Put differently, different types of accumulations may be more or less efficiently removed with different frequencies. Which combination and what values of the frequency f, amplitude A and duration Δt to use may be empirically determined. For instance, by logging achieved running time for different combinations of values, a preferred combination of frequency f, amplitude A and duration Δt may be determined and linked to the liquid food product LFP that is heat treated such that this preferred combination can be used next time the liquid food product LFP is to be heat treated. This preferred combination may also be shared with other similar heat treatment apparatuses by e.g. forming a database 117 of preferred combinations for different liquid food products.

Different liquid food products should in this context be construed broadly. For instance, milk may generate different types of fouling, or more generally accumulations, at different temperature intervals. Thus, the preferred combination to use for removing the accumulations 116 may be different for different temperature intervals. To provide for that the combination of frequency f, amplitude A and duration Δt may be adapted quickly a temperature sensor 118 may be used. As illustrated, the temperature sensor 118 may be placed in the inlet pipe 102 such that the temperature T of the liquid food product LFP transferred towards the main body 104 can be determined before reaching the main body 104.

Temperature measurement data 120 generated by the temperature sensor 118 can be transferred to a control unit 122. This may in turn determine the combination of the frequency f, the amplitude A and the duration Δt of the ultrasonic pulses 112 linked to the temperature T measured by the temperature sensor 118 by using e.g. the database 117. After determined the combination, control data 124 can be generated and transmitted to the ultrasound generator 110 such that this is set to generate the ultrasonic pulses 112 according to the combination of frequency f, amplitude A and duration Δt linked to the temperature T.

In a similar manner, since properties of the accumulations 116 can depend on flow of the liquid food product LFP, a flow sensor 126 can be used. As for the temperature sensor 118, the flow sensor 126 can be placed in the inlet pipe 102. Flow measurement data 128 generated by the flow sensor 126 can be transferred to the control unit 122 in which the combination linked to the flow can be determined. When the combination is determined, the control data 124 can be generated and transmitted to the ultrasound generator 110 such that this can be adjusted to meet specific properties of the accumulations 116 formed. In case both the temperature sensor 118 and the flow sensor 126 are present, the combination may be determined based on both the temperature measurement data 120 and the flow measurement data 128.

The accumulations 116 may be also depend on content of the liquid food product LFP, such as mineral content or protein content. Thus, in addition to the temperature measurement data 120 and/or the flow measurement data 128, content data 130 may be provided to the control unit 130. Even though not illustrated, the content data 130 may be generated by different sensor systems, inline or offline, or it may also be manually input by an operator via an operator panel.

Placement data 132, that is, information about where the ultrasound generator 110 is placed in the heat treatment apparatus 100, may also be provided to the control unit 122, e.g. via the operator panel. Since different types of accumulations may be formed in different parts of the heat treatment apparatus 100, this information may be used in combination with the temperature measurement data 120 and/or the flow measurement data 128 and/or the content data 128 or on its own, for determining what frequency f, amplitude A and duration Δt shall be used.

The accumulations may, as described above, be removed or prevented from being formed by the ultrasonic pulses 112. Removal of the accumulations 116, which may for instance, as illustrated, be formed on a side section of the main body 104 or on the heat transfer medium provider 106, may be made in that the accumulations 116 are disintegrated by the ultrasonic pulses 112. After being disintegrated into small pieces, or before even having the possibility to deposit and form bigger pieces, the accumulations 116 may be transported away from the heat treatment apparatus 100 by the liquid food product LFP. Prevention may be made in that the ultrasonic pulses 112 provide for that the fouling or other types of accumulations 116 do not attach. As an effect clean surfaces are maintained since build-up of fouling or the like can be prevented.

In fig. 2 another example of the heat treatment apparatus is illustrated, more particularly a tubular heat exchanger 200. Unlike the steam injector heat treatment apparatus illustrated in fig. 1, the heat transfer medium HTM is indirectly heating the liquid food product LFP in the tubular heat exchanger 200. The liquid food product LFP is transferred inside tubes that are group to form tube bundles 202. The heat transfer medium HTM can be provided in outer shells 204 surrounding the tube bundles 202. The tube bundles 202 can be connected to each other by connection pipes 206. As illustrated, the tube bundles 202 can comprise straight pipes and the connection pipes 206 can be bent. Further, the connection pipes 206 can have a single-tube design, i.e. instead of having several inner tubes as the tube bundles 202, these can comprise one single inner tube. Due to this difference and resulting flow pattern resulting from this, interfaces between the tube bundles 202 and the connection pipes 206 may be particularly affected to accumulations.

In tubular heat exchangers, the heat transfer medium HTM may be hot water, but it may also be the liquid food product LFP. When using the liquid food product LFP for heating, also known as running regeneratively, incoming liquid food product LFP can be held in the tube bundles 202 and outgoing liquid food product LFP, which has been heat treated and is to be cooled down, can be provided in the outer shells 204 and serve as the heat transfer medium HTM.

As illustrated, the tubular heat exchanger 200 may be provided with a heat transfer medium inlet 208 arranged to receive the heat transfer medium HTM and a heat transfer medium outlet 210 arranged to feed out the heat transfer medium HTM. The liquid food product LFP can be received via a main inlet pipe 212 and fed out via a main outlet pipe 214.

The ultrasound generator 110 may be placed on the connection pipes 206 such that the accumulations formed in the interfaces between the connection pipes 206 and the tube bundles 202 can be efficiently removed or prevented. As illustrated, the ultrasound generators 110a, 100b can be used in pairs with one of them placed on the inlet side of a tube bundle and the other on the outlet side of the same tube bundle.

To attach the ultrasound generators 110 to the connection pipes 206 or other pipes, pipe collars 216, or other similar element that can be attached to an outside of the connection pipes 206, can be used. An advantage with using these is that the ultrasound generators 210 can easily be moved between different locations on the connection pipes 206 by the operator without requiring the tubular heat exchanger 200 to be stopped.

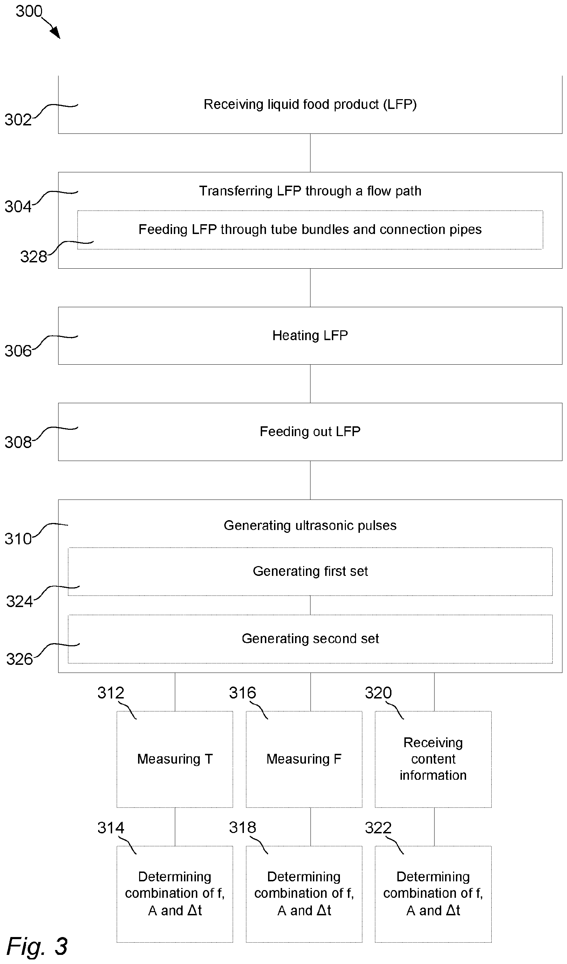

Fig. 3 is a flowchart that illustrates a method 300 for heat treating the liquid food product LFP in a heat treatment apparatus. The heat treatment apparatus may for example be of the type described in connection with fig. 1 or 2.

In a first step 302, the liquid food product LFP can be received via the inlet pipe 102 of the heat treatment apparatus.

Thereafter, in a second step 304, the liquid food product LFP can be transferred, by using e.g. he feed pump 101, through the flow path FP of the heat treatment apparatus. Step 304 may, if a heater like in fig. 2 is used, include feeding 328 the liquid food product LFP through a number of tube bundles 202 and a number of connection pipes 206 that connects two tube bundles to each other.

In a third step 306, the liquid food product LFP can be heated with the heat transfer medium HTM. As illustrated above, this may be made directly be injecting steam into the liquid food product LFP as illustrated in fig. 1 or it may be made indirectly by using the tubular heat exchanger 200 illustrated in fig. 2. Step 306 may, if a heater like in fig. 2 is used, include providing the heat transfer medium HTM in a number of outer shells 204 placed around the number of tube bundles 202.

In a fourth step 308, the liquid food product LFP can be fed out via the outlet pipe 108 of the heat treatment apparatus 100.

In a fifth step 310 the ultrasonic pulses 112 can be generated by using the ultrasound generator 110, in at least one section 114 of the flow path FP, for preventing the accumulations 116 of the liquid food product LFP to deposit on said at least one section 114 of the flow path FP or removing the accumulations 116 of the liquid food product LFP deposited on the at least one section 114 of the flow path FP.

Optionally, in a sixth step 312, the temperature T of the liquid food product LFP can be measured, and, in a seventh step 314, the combination of frequency f, amplitude A and duration Δt of the ultrasonic pulses 112 can be determined based on the temperature T of the liquid food product LFP passing through the flow path FP.

Optionally, in an eighth step 316, the flow F of the liquid food product LFP can measured, and, in a ninth step 318, the combination of the frequency f, the amplitude A and the duration Δt of the ultrasonic pulses 112 can be determined based on the flow F of the liquid food product LFP passing through the flow path FP.

Optionally, in a tenth step 320, the information about content of the liquid food product LFP, such as mineral content or protein content of the liquid food product LFP, can be received, e.g. by that the operator input this information. In an eleventh step 322, the combination of the frequency f, the amplitude A and the duration Δt of the ultrasonic pulses 112 can be determined based on the content of the liquid food product LFP passing through the flow path FP.

The fifth step 310, in which the ultrasonic pulses 112 are generated by using the ultrasound generator 110, may comprise two sub-steps; an twelfth step 324 in which a first set of ultrasonic pulses with the mineral accumulation disintegration frequency is generated, and a thirteenth step 326 in which a second set of ultrasonic pulses with the protein accumulation disintegration frequency is generated. Since mineral fouling may have a higher density compared to protein fouling, the mineral accumulation disintegration frequency may be higher than the protein accumulation disintegration frequency.

From the description above follows that, although various embodiments of the invention have been described and shown, the invention is not restricted thereto, but may also be embodied in other ways within the scope of the subject-matter defined in the following claims.

## Claims

1. A method (300) for heat treating a liquid food product (LFP) in a heat treatment apparatus (100), said method comprising
receiving (302) the liquid food product (LFP) via an inlet pipe (102) of the heat treatment apparatus (100),
transferring (304), by using a feed pump (101), the liquid food product (LFP) through a flow path (FP) of the heat treatment apparatus (100),
heating (306) the liquid food product (LFP) with a heat transfer medium (HTM),
feeding out (308) the liquid food product (LFP) via an outlet pipe (108) of the heat treatment apparatus (100), **characterized by**
generating (310) ultrasonic pulses (112), by using an ultrasound generator (110), in at least one section (114) of the flow path (FP), for
- preventing accumulations (116) of the liquid food product (LFP) to deposit on said at least one section (114) of the flow path (FP), or
- removing accumulations (116) of the liquid food product (LFP) deposited on the at least one section (114) of the flow path (FP).

2. The method according to claim 1, wherein the ultrasound generator (110) is attached to an outside of the heat treatment apparatus (100) and the ultrasonic pulses (112) penetrate through a wall (111) of the heat treatment apparatus (100) and into the flow path (FP).

3. The method according to any one of the preceding claims, further comprising
measuring (312) a temperature (T) of the liquid food product (LFP), and
determining (314) a combination of frequency (f), amplitude (A) and duration (Δt) of the ultrasonic pulses (112) based on the temperature (T) of the liquid food product (LFP) passing through the flow path (FP).

4. The method according to any one of the preceding claims, further comprising
measuring (316) a flow (F) of the liquid food product (LFP), and
determining (318) the combination of the frequency (f), the amplitude (A) and the duration (Δt) of the ultrasonic pulses (112) based on the flow (F) of the liquid food product (LFP) passing through the flow path (FP).

5. The method according to any one of the preceding claims, further comprising
receiving (320) information about content of the liquid food product (LFP), such as mineral content or protein content of the liquid food product (LFP), and
determining (322) the combination of the frequency (f), the amplitude (A) and the duration (Δt) of the ultrasonic pulses (112) based on the content of the liquid food product (LFP) passing through the flow path (FP).

6. The method according to any one of the claims 3 to 5, wherein the frequency is set as a protein accumulation disintegration frequency or a mineral accumulation disintegration frequency, wherein the mineral accumulation disintegration frequency is different from the protein accumulation disintegration frequency.

7. The method according to claim 6, wherein the step of generating (310) the ultrasonic pulses (112), by using the ultrasound generator (110), in the at least one section (114) of the flow path (FP), comprises the sub-steps of
generating (324) a first set of ultrasonic pulses with the mineral accumulation disintegration frequency, and
generating (326) a second set of ultrasonic pulses with the protein accumulation disintegration frequency.

8. The method according to any one of the preceding claims,
wherein the step of transferring (304) the liquid food product (LFP) comprises feeding (328) the liquid food product (LFP) through a number of tube bundles (202) and a number of connection pipes (206) that connects two tube bundles to each other, wherein the number of connection pipes (206) and the number of tube bundles (202) together form the flow path (FP),
wherein the step of heating (306) the liquid food product (LFP) comprises providing the heat transfer medium (HTM) in a number of outer shells (204) placed around the number of tube bundles (202).

9. The method according to claim 8, wherein the at least one section (114) of the flow path (FP) is comprised in one of the number of connection pipes (206).

10. The method according to claim 8 or 9, wherein a first ultrasonic generator (110a) is placed at the inlet of one of the tube bundles (202) and a second ultrasonic generator (110b) is placed at the outlet on the same tube bundle (202).

11. The method according to any one of the preceding claims, wherein the liquid food product (LFP) is a protein-enriched liquid food product.

12. A heat treatment apparatus (100) for heat treating a liquid food product (LFP), said apparatus (100) comprising
an inlet pipe (102) for receiving the liquid food product (LFP),
a main body (104) for holding the liquid food product (LFP),
a heat transfer medium provider (106) for heating the liquid food product (LFP) with a heat transfer medium (HTM),
an outlet pipe (108) for feeding out the liquid food product (LFP),
wherein the heat treatment apparatus (100) is arranged to transfer the liquid food product (LFP) along a flow path (FP) through the inlet pipe (102), the main body (104) and the outlet pipe (108), and
an ultrasound generator (110) for generating ultrasonic pulses (112) in at least one section (114) of the flow path (FP) for
- preventing accumulations (116) of the liquid food product (LFP) to deposit on said at least one section (114) of the flow path (FP) or
- removing accumulations (116) of the liquid food product (LFP) deposited on the at least one section (114) of the flow path (FP).

13. The heat treatment apparatus according to claim 12, wherein the ultrasound generator (110) is attached to an outside of the heat treatment apparatus (100) and the ultrasonic pulses (112) penetrate through a wall (111) of the heat treatment apparatus (100) and into the flow path (FP).

14. The heat treatment apparatus (100) according to claim 12 or 13, further comprising
a temperature sensor (118) configured to measure a temperature (T) of the liquid food product (LFP) and to generate temperature measurement data (120) corresponding to the temperature (T),
a control unit (122) configured to receive the temperature measurement data (120) from the temperature sensor (118), to determine a combination of frequency (f), amplitude (A) and duration (Δt) of the ultrasonic pulses (112) based on the temperature (T) of the liquid food product (LFP) passing through the flow path (FP), and to transmit control data (124) to the ultrasound generator (110) to set such the ultrasound generator (110) to generate the ultrasonic pulses (112) according to the combination of the frequency (f), the amplitude (A) and the duration (Δt).

15. The heat treatment apparatus (100) according to any one of the claims 12 or 14, further comprising
a flow sensor (126) configured to measure a flow (F) of the liquid food product (LFP) and to generate flow measurement data (128) corresponding to the flow (F),
wherein the control unit (122) is configured to receive the flow measurement data (128) from the flow sensor (126), to determine the combination of the frequency (f), the amplitude (A) and the duration (Δt) of the ultrasonic pulses (112) based on the flow (F) of the liquid food product (LFP) passing through the flow path (FP), and to transmit the control data (124) to the ultrasound generator (110) to set the ultrasound generator (110) to generate the ultrasonic pulses (112) according to the combination of the frequency (f), the amplitude (A) and the duration (Δt).
